Europäisches Patentamt

(19) European Patent Office

Office européen des brevets

(11) Publication number: **0 167 334**
**A2**

(12) # EUROPEAN PATENT APPLICATION

(21) Application number: **85304494.9**

(22) Date of filing: **25.06.85**

(51) Int. Cl.⁴: **F 17 C 13/12**
**F 17 C 1/16**

(30) Priority: **02.07.84 US 626778**
**18.06.85 US 744866**

(43) Date of publication of application:
**08.01.86 Bulletin 86/2**

(84) Designated Contracting States:
**DE FR GB**

(71) Applicant: **BRUNSWICK CORPORATION**
**One Brunswick Plaza**
**Skokie Illinois 60077(US)**

(72) Inventor: **Steele, Louis F.**
**1135 North 69th Street**
**Lincoln Nebraska 68505(US)**

(74) Representative: **Allden, Thomas Stanley et al,**
**A.A. THORNTON & CO. Northumberland House 303-306**
**High Holborn**
**London WC1V 7LE(GB)**

(54) **Pressure vessels with shock dissipation.**

(57) For use on a pressure vessel or the like, one form of the invention provides a protective shroud of interlaced fibrous material encompassing the vessel to contain fragments and dissipate shock waves upon accidental rupture or explosion of the vessel. The interlaced fibrous material of the shroud can be woven, knitted or otherwise fabricated and maintained in contact with the outer surface of the vessel. Another form of the invention provides at least one layer of unimpregnated fibrous material interiorly of the pressure vessel. In one embodiment, an inner composite includes a plurality of layers of filaments forming part of the thickness of the vessel, the inner composite being impregnated of cured epoxy material. At least one layer of unimpregnated fibrous material is laid up about the inner composite. An outer composite includes a plurality of layers of filaments forming part of the thickness of the vessel about the layer of unimpregnated fibrous material, the outer composite being impregnated of cured epoxy material. In another embodiment, the layer of unimpregnated fibrous material and the outer composite are laid up over an inner liner of the pressure vessel.

EP 0 167 334 A2

./...

FIG. 2

FIG. 5

FIG. 6

PRESSURE VESSELS WITH SHOCK DISSIPATION

This invention relates generally to pressure vessels and particularly to means for providing protection to contain fragments and dissipate shock waves upon accidental rupture of the vessel.

Pressure vessels come in many different sizes and shapes and are used for a variety of purposes. One type of pressure vessel is in the area of filament wound vessels which often are constructed in a spherical shape or a cylindrical elongated shape with generally spherical end portions for use in high pressure container applications. For instance, the design criteria of light-weight construction and high resistance to fragmentation and corrosion damage has led to the development of high pressure containers fabricated of laminated layers of wound fiberglass filaments or various types of synthetic filaments, such as nylon, rayon or Kevlar yarn, which are bonded together by a thermo-setting epoxy resin. Of course, the invention herein is not limited to any types or shapes of vessels.

Although filament wound vessels have the desirable quality of resistance to fragmentation, some fragmentation still exists and shock waves are prevalent upon rupture or explosion of the vessels when under high pressure. An example of the use of pressure vessels is in life support systems for holding gaseous substances such as oxygen. For instance, in life support systems on aircraft, or escape systems in aeronautical vehicles, oxygen often is contained by very high pressure vessels, such as the filament wound vessels described above. Upon accidental rupture or explosion of such a vessel, such as when being struck by a bullet in gunfire situations, fragments or shock waves from the vessel itself can be fatal. An example of such an environment is in the cabin of an aircraft or a compartment of an aeronautical vehicle.

The present invention is directed to solving these problems by providing means to contain fragments as well as dissipate shock waves upon accidental rupture or explosion of a vessel which could result in injury or death to individuals as well as damage to expensive instruments in proximity to the vessel.

## Summary of the Invention

An object, therefore, of the invention is to povide simple, inexpensive and novel means for containing fragments and dissipating shock waves upon accidental rupture or explosion of pressure vessels.

In one form of the invention, a shroud of interlaced fibrous material encompasses the pressure vessel to contain the fragments and dissipate shock waves. The shroud can be woven or knitted and can be fabricated of fiberglass or synthetic materials, such as Kevlar fibers. The shroud is sized to engage substantially the entire outer surface of the vessel. The shroud is sufficiently elastic to be stretched and maintained in contact with the outer surface of the vessel. A thermosetting epoxy resin also may be used to secure the shroud to the vessel as well as other means to attach the shroud to the vessel.

One pressure vessel shown herein is elongated and includes at least one generally spherical end. The shroud is fabricated in a tubular shape complementary to the shape of the elongated vessel. The shroud may be woven or knitted to have one closed end, and the opposite end maintained open for receiving the vessel. The open end then can be closed around the opposite end of the vessel, such as by twisting and overlapping the shroud onto itself. Or the shroud can be cut from a length of tubular material with opposite open ends. Such a shroud has many advantages. Among the advantages is its light weight which is practically negligible in relation to the composite weight of the vessel. The shroud also adds practically negligible dimensions to the outside diameter of the vessel. It also is easily adaptable to any size or shape of pressure vessel. The shroud provides remarkable protection against flying fragments and also dissipates shock waves, and thus eliminates complex design modifications to pressure vessels that are required to meet certain rupture criteria, such as gunfire criteria where pressure vessels are susceptible of being struck by a bullet.

In another form of the invention, the interlaced fibrous material is provided primarily for dissipating shock waves which, in turn, effect fragmentation, and the fibrous material is disposed in a layer interiorly of the vessel rather than as a shroud. More particularly, in one embodiment an inner composite is provided including a plurality of layers of filaments forming part of the thickness of the vessel. The inner composite is impregnated of cured epoxy material. At least one layer of unimpregnated fibrous material is laid up about the inner composite. An outer composite is provided with a plurality of layers of filaments forming part of the thickness of the vessel about the layer of unimpregnated fibrous material, the outer composite being impregnated of cured epoxy material. The layer of unimpregnated fibrous material is interlaced and substantially surrounds the inner composite. Preferably, the inner composite is cured, the layer of unimpregnated fibrous material then is laid up about the cured inner composite, and the outer composite then is cured.

In another embodiment of the second form of the invention, wherein the fibrous material is disposed interiorly of a vessel, a layer of unimpregnated fibrous material is laid up over an inner liner for the vessel. The outer composite then is provided over the layer of unimpregnated fibrous material and cured.

Other objects, features and advantages of the invention will be apparent from the following detailed description taken in connection with the accompanying drawings.

## Description of the Drawings

The features of this invention which are believed to be novel are set forth with particularity in the appended claims. The invention, together with its objects and the advantages thereof, may be best understood by reference to the following description taken in conjunction with the accompanying drawings, in which like reference numerals identify like elements in the figures and in which:

FIGURE 1 is a perspective view of one form of a filament wound pressure vessel in its actual condition after being struck and ruptured by a bullet;

FIGURE 2 is a view of the pressure vessel surrounded by a protective shroud according to the invention;

- 5 -

0167334

FIGURE 3 is a view of a presure vessel similar to that of Figure 1 protected by a shroud according to the invention and illustrating the rupturing effect after being struck by a straight bullet;

FIGURE 4 is a view of a pressure vessel similar to that of Figure 1 protected by a shroud according to the invention and illustrating the rupturing effect after being struck by a "tumbled" or flat bullet;

FIGURE 5 is a section through another form of a filament wound pressure vessel with the unimpregnated fibrous material sandwiched between inner and outer composite thicknesses; and

FIGURE 6 is a section through a pressure vessel with the layer of unimpregnated fibrous material laid up about an inner liner of the vessel.

Description of the Preferred Embodiment

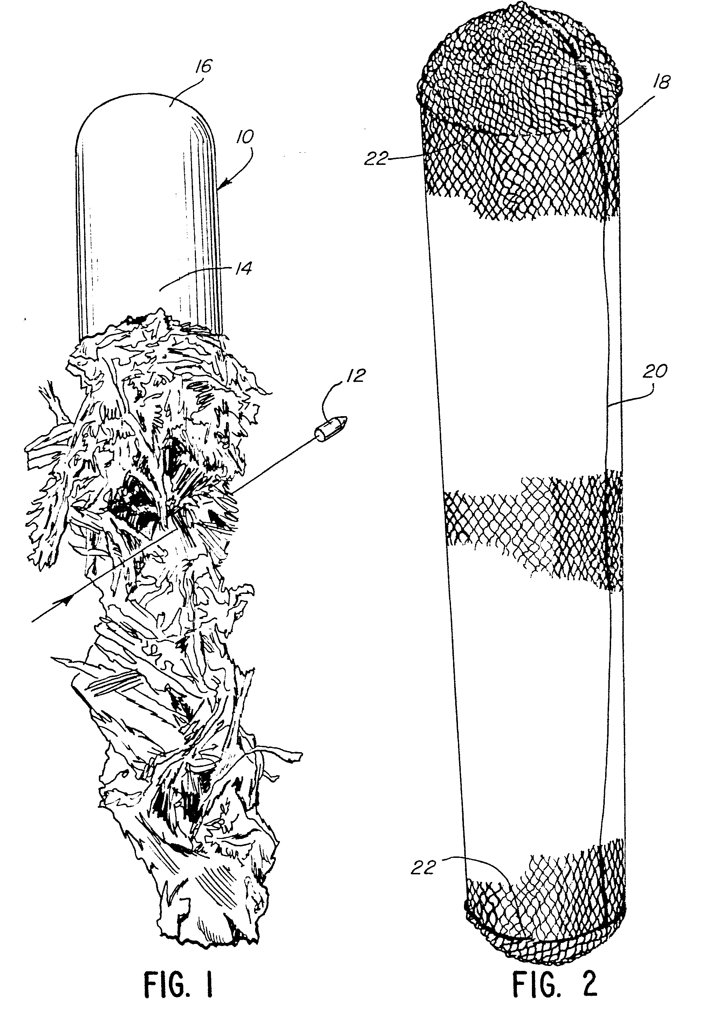

Referring to the drawings in greater detail, and first to Figure 1, a pressure vessel, generally designated 10, is illustrated from an actual photograph of a filament wound pressure vessel after being struck by a 50 caliber bullet 12. The pressure vessel was, elongated or cylindrical in shape, as indicated at 14, and included two opposite spherically shaped ends 16. The vessel was fabricated of layers of fibers including fibers extending in the longitudinal direction of the vessel as well as circularly or cylindrically wound fibers, with polar windings at opposite ends of the vessel. Of course, a fitting, not shown, normally is provided at one of the polar ends for filling the vessel, as with a gaseous substance under very high pressure.

It can be seen in Figure 1 that the vessel was substantially fragmented and a considerable portion thereof blown away as "shrapnel". These flying fragments created upon rupture or explosion of the vessel can cause injury or death to individuals in proximity to the exploding vessel, as well as damage to expensive instruments such as in the cockpit of an aircraft or the compartment of an aeronautical vehicle. In addition, shock waves created upon explosion of such a high pressure vessel can cause as much injury or damage as the flying fragments.

Figure 2 shows a pressure vessel similar to the shape of vessel 10 prior to its rupture, and including a protective shroud, generally designated 18, encompassing the vessel. The shroud comprises interlaced fibrous material completely encompassing the vessel to contain fragments and dissipate shock waves upon rupture of the vessel. The shroud can be fabricated of interlaced glass fibers or synthetic fibers, such as Kevlar. The shroud can be woven or knitted in any desired shape and size complementary to the shape and size of the respective pressure vessel with which it is to be used. The shroud should be sized to engage substantially the entire outer surface of the vessel. With the shroud woven, knitted or otherwise fabricated, sufficient elasticity is provided such that the shroud can be stretched and maintained in contact with the entire outer surface of the vessel. In addition, it has been found effective to employ a cured epoxy material to secure the entire shroud to the surface of the vessel. Either before or after the shroud is plced over the vessel and properly positioned, liquid epoxy may be applied and cured in place.

With an elongated cylindrical vessel as illustrated by vessel 10, the shroud can be fabricated in tubular form with one end closed and the opposite end open for positioning the

0167334

vessel thereinto. On the other hand, a length of shroud can be fabricated in tubular form and simply cut to appropriate section lengths. It can be seen in Figure 2 that a seam 20 runs the length of the shroud. The tubular length can be fabricated from a flat blank and sewn together at seam 20 to form the tubular shpe of the shroud complementary to the cylindrical shape of vessel 10. Figure 2 also shows an expedient means for closing the shroud onto opposite ends of the vessel. The shroud simply is twisted and folded back onto itself to an extent indicated at 22 at opposite ends of the vessel.

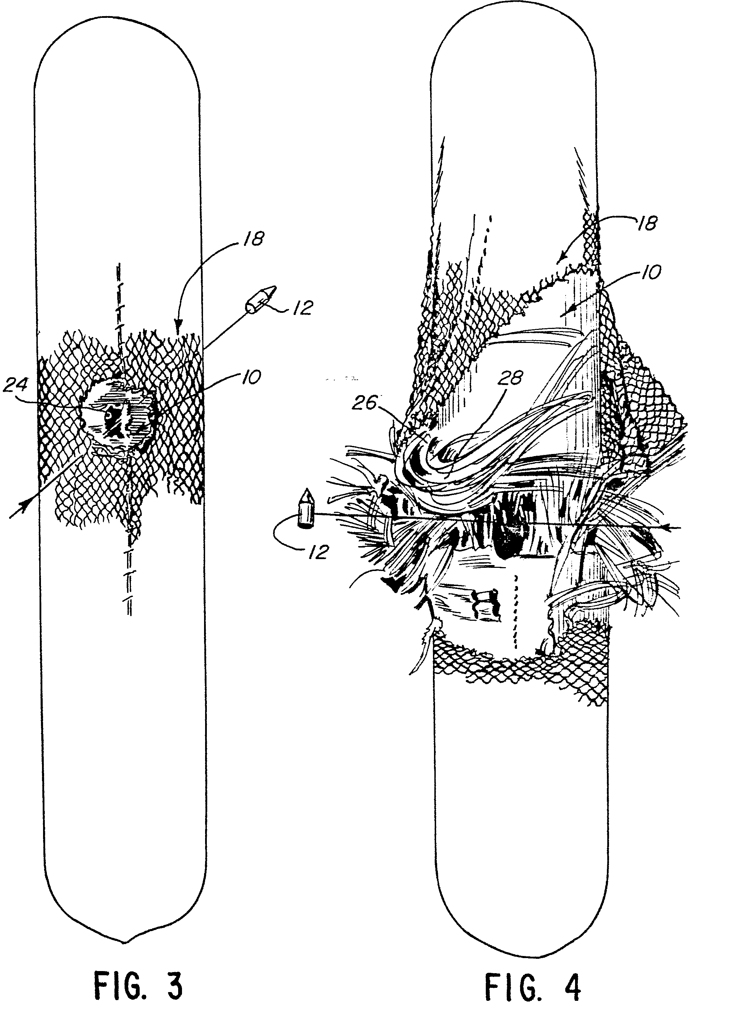

Figure 3 is a view taken from an actual photograph of a pressure vessel 10, encompassed by a shroud 18, after being struck by a 50 caliber bullet 12 under gunfire testing. The vessel was fabricated of Kevlar filaments. The shroud was knitted of Kevlar fibrous material encompassing the vessel. It can be seen that rupture 24 to the vessel is quite negligible, particularly compared to Figure 1 which shows an identical vessel after being struck by an identical bullet but without the proteciton of the shroud of the invention. Not only is the disastrous fragmentation illustrated in Figure 1 practially eliminated, but the shroud reduced shock waves to a practically negligible amount.

Gunfire testing also was carried out wherein bullets were "tumbled" whereupon the bullet may strike a vessel in a flat condition. In other words, Figure 3 shows the results when the pressure vessel was struck by a "straight" 50 caliber bullet. Figure 4 is a view taken from an actual photograph of a pressure vessel 10 after being struck by a tumbled or flat 50 caliber bullet 12 under gunfire testing, with protective shroud 18 encompassing the vessel. Again, the shroud was faricated of knitted Kevlar fibrous material. However, the vessel was fabricated of fiberglass filaments. The protection provided by the shroud is obvious by the illustration depicted in Figure 4, particularly with reference to the disastrous fragmentation shown in Figure 1. It can be seen at 26 that the shroud actually has been stretched by exploding filaments 28, with the interlaced fibrous material of the shroud actually holding filament fragments against explosion.

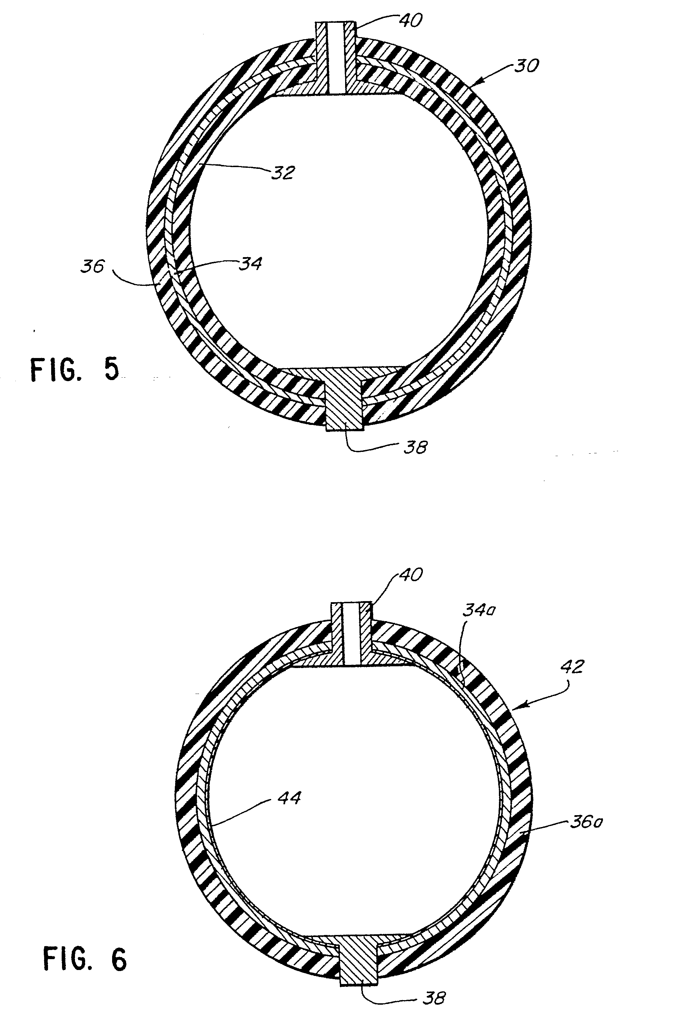

Figures 5 and 6 show two embodiments of another form of the invention wherein the interlaced fibrous material is laid up interiorly of a pressure vessel rather than an encompassing shroud. The Figures show sections through a pressure vessel which may be either spherical or cylindrical in shape. Figure 5 shows a layer of interlaced fibrous material sandwiched between inner and outer composite thicknesses of the vessel. Figure 6 shows a layer of interlaced fibrous material about an inner liner of the vessel and interiorly of an outer composite thickness of the vessel.

More particularly, Figure 5 shows a filament wound pressure vessel, generally designated 30, which includes an inner composite 32 formed by a plurality of layers of filaments forming an inner thickness of the vessel. Inner composite 32 is impregnated of cured epoxy material. At least one layer of unimpregnated, interlaced fibrous material 34 is laid up about and surrounding inner composite 32. An outer composite 36 is formed of a plurality of layers of filaments to define an outer thickness of the vessel about the layer of unimpregnated fibrous material 34. The outer composite is impregnated of cured epoxy material.

Vessel 30 is illustrated as a spherical vessel and includes polar bosses or fittings 38 and 40. Composites 32 and 36 are conventionally wound, as by known methods in numerically controlled winding apparatus using a sequence of polar winding patterns wound with incrementally increasing wind angles away from the polar opening, boss or fitting. The required thickness is obtained by repeating this sequence of patterns and integral number of times corresponding to the desired number of layers.

Vessel 30 is fabricated by winding inner composite 32 with a plurality of layers, the layers being impregnated with epoxy material, and then curing the inner composite. Unimpregnated fibrous material 34 then is laid up about the cured inner composite. Outer composite 36 then is wound with a plurality of layers of filaments to form the outer thickness of the vessel about the unimpregnated fibrous materials, the layers of the outer composite being impregnated with epoxy material. The outer composite then is cured to form the vessel, with the unimpregnated fibrous material 32 sandwiched between the inner and outer composites 32 and 36, respectively. This interior positioning of the unimpregnated fibrous material provides an inner barrier to effectively dissipate shock waves upon accidental rupturing of the vessel and thereby inhibits fragmentation of the vessel.

At this point, it should be understood that the use of the term "interlaced" herein is intended to encompass filament wound, braided, knitted woven cloth, hand laid up and like fibrous material. A layer or layers of such different material within an otherwise substantially uniform structure is effective in altering or dissipating shock waves within the vessel, as well as to contain fragments upon rupture of the vessel.

In addition, as stated above, the layer or layers of fibrous material are unimpregnated and this be accomplished in a variety of manners. For instance, a thin barrier film can be positioned about unimpregnated layer 34 before winding outer composite 36 which comprises layers of filaments impregnated with epoxy before curing. Another method might be to spray a release material, such as silicone, over fibrous layer 34 before winding outer composite 36 and thereby prevent saturation of unimpregnated layer 34. On the other hand, such means as a thin film or a release spray might even be eliminated completely if the windings of outer composite 36 are maintained sufficiently "dry" of epoxy or resin material. In other words, excess epoxy on the filaments of composite 36 might be avoided at least to the extent of substantially eliminating saturation of unimpregnated fibrous layer 34.

Figure 6 shows another embodiment of the form of the invention contemplating the location of the layer of unimpregnated fibrous material within the pressure vessel. More particularly, a pressure vessel, generally designated 42, is provided with a thin inner liner 44 on the inside of the vessel for supporting the outer layers and/or windings. The inner liner may be of thin-walled metallic material, for instance. At least one layer of unimpregnated fibrous material 34a is laid up about inner liner 44, similar to the parameters described above in relation to unimpregnated layer 34. An outer composite 36a then is wound with a plurality of layers of filaments to form a substantial part of the thickness of the vessel about layer 34a of unimpregnated fibrous material, the layers of composite 36a being impregnated with epoxy material, as with composite 36 described above. Composite 36a then is cured to complete the process of fabricating the vessel before pressurization.

In view of the foregoing, it can be seen that I have provided a very simple yet extremely efficient and effective means for protecting against fragmentation and shock wave dissipation upon the rupture or explosion of high pressure vessels.

It will be undertsood that the invention may be embodied in other specific forms without departing from the spirit or central characteristics thereof. The present examples and embodiments, therefore, are to be considered in all respects as illustrative and not restrictive, and the invention is not to be limited to the details given herein.

CLAIMS:                                                0167334

1.  For use on a pressure vessel or the like, an integral shroud of interlaced fibrous material completely encompassing said vessel to contain fragments and dissipate shock waves upon rupture of the vessel, said interlaced fibrous material conforming to the size and shape of the vessel and maintained in contact with substantially the entire outer surface of the vessel.

2.  The shroud of claim 1 wherein said interlaced fibrous material includes Kevlar fibers.

3.  The shroud of claim 1 wherein said interlaced fibrous material includes glass fibers.

4.  The shroud of claim 1 wherein said interlaced fibrous material is woven.

5.  The shroud of claim 1 wherein said interlaced fibrous material is knitted.

6.  The shroud of claim 1 wherein said pressure vessel is elongated and includes at least one generally spherical end, and said shroud is twisted to close and encompass said spherical end.

7.  The shroud of claim 1 wherein said pressure vessel is elongated, and said shroud is fabricated in a tubular shape complementary to the shape of the elongated vessel.

8.    The shroud of claim 7 wherein said tubular shroud is tied to close at least one end thereof at an end of said elongated vessel.

9.    The shroud of claim 7 wherein said tubular shroud is twisted and overlapped onto itself to close at least one end thereof at an end of said elongated vessel.

10.    The shroud of claim 1 including cured epoxy material securing the shroud to the surface of the vessel.

11.    The shroud of claim 1 wherein said interlaced fibrous material is sufficiently elastic to be stretched and maintained in contact with the outer surface of said vessel.

- 14 -

0167334

12. For use on a pressure vessel or the like having a predetermined size and shape, an integral shroud of interlaced fibrous material completely encompassing said vessel to contain fragments and dissipate shock waves upon rupture of the vessel, said interlaced fibrous material being sufficiently elastic to be stretched to the size and shape of the vessel and maintained in contact with substantially the entire outer surface of the vessel.

13. In combination, a pressure vessel of a predetermined size and shape, and an integral shroud of interlaced fibrous material completely encompassing said vessel to contain fragments and dissipate shock waves upon rupture of the vessel, said interlaced fibrous material being sufficiently elastic to be stretched to the size and shape of the vessel and maintained in contact with substantially the entire outer surface of the vessel.

14. The combination of claim 13 wherein said interlaced fibrous material includes Kevlar fibers.

15. The combination of claim 13 wherein said interlaced fibrous material includes glass fibers.

16. The combination of claim 13 wherein said interlaced fibrous material is woven.

17. The combination of claim 13 wherein said interlaced fibrous material is knitted.

- 15 -

0167334

18. The combination of claim 13 wherein said pressure vessel is elongated and includes at least one generally spherical end, and said shroud is twisted to close and encompass said spherical end.

19. The combination of claim 13 wherein said pressure vessel is elongated, and said shroud is fabricated in a tubular shape complementary to the shape of the elongated vessel.

20. The combination of claim 19 wherein said tubular shroud is tied to close at least one end thereof at an end of said elongated vessel.

21. The combination of claim 19 wherein said tubular shroud is twisted and overlapped onto itself to close at least one end thereof at an end of said elongated vessel.

22.   A filament wound presure vessel, comprising:

an inner composite including a plurality of layers of filaments forming part of the thickness of the vessel, the inner composite being impregnated of cured epoxy material;

at least one layer of unimpregnated fibrous material about the inner composite; and

an outer composite including a plurality of layers of filaments forming part of the thickness of the vessel about the layer of unimpregnated fibrous material, the outer composite being impregnated of cured epoxy material.                   ₹

23.   The filament wound pressure vessel of claim 22 wherein said at least one layer of unimpregnatd fibrous material is interlaced and substantially surrounds the inner composite.

24. A method of fabricating a filament wound pressure vessel, comprising the steps of:

winding an inner composite of a plurality of layers of filaments to form part of the thicknes of the vessel, the layers being impregnated with epoxy material;

curing the inner composite;

laying up at least one layer of unimpregnated fibrous material about the cured inner composite;

winding an outer composite of a plurality of layers of filaments to form part of the thickness of the vessel about the layer of unimpregnted fibrous material, the layers being impregnated with epoxy material; and

curing the outer composite.


25. The method of claim 24 wherein said at least one layer of unimpregnated fibrous material is interlaced and is laid up to substantially surround the cured inner composite.

26. A filament wound pressure vessel, comprising:

an inner liner;

at least one layer of unimpregnated fibrous material about the inner liner; and

an outer composite including a plurality of layers of filaments forming part of the thickness of the vessel about the layer of unimpregnated fibrous material, the outer composite being impregnated of cured epoxy material.

27. The filament wound pressure vessel of claim 26 wherein said at least one layer of unimpregnated fibrous material is interlaced and substantially surrounds the inner liner.

28. A method of fabricating a filament wound pressure vessel, comprising the steps of:

providing an inner liner for the vessel;

laying up at least one layer of unimpregnated fibrous material about the inner liner;

winding an outer composite of a plurality of layers of filaments to form part of the thickness of the vessel about the layer of unimpregnated fibrous material, the layers being impregnated with epoxy material; and

curing the outer composite.


29. The method of claim 28 wherein said at least one layer of unimpregnated fibrous material is interlaced and is laid up to substantially surround the inner liner.

0167334

FIG. 1

FIG. 2

FIG. 3

FIG. 4

FIG. 5

FIG. 6